# EUROPEAN PATENT APPLICATION

(11) **EP 2 434 717 A1**
(43) Date of publication of application: **28.03.2012**
(21) Application number: 10788780.4
(22) Date of filing: 18.05.2010
(51) Int. Cl.: H04L 29/06

(54) **METHOD AND APPARATUS FOR IMPROVING UTILIZATION OF BROADCAST CHANNEL FRAME AND METHOD AND APPARATUS FOR USING PADDING PORTION**

(30) Priority: 29.06.2009 CN 200910088421
(71) Applicant: ZTE Corporation, Shenzhen, Guangdong 518057 (CN)
(72) Inventor: LIN, Ya, Shenzhen Guangdong 518057 (CN); ZHANG, Jianqiang, Shenzhen Guangdong 518057 (CN); RUAN, Yaping, Shenzhen Guangdong 518057 (CN); TONG, Dengjin, Shenzhen Guangdong 518057 (CN)
(74) Representative: Manitz, Finsterwald & Partner GbR
(86) International application number: PCT/CN2010/072899
(87) International publication number: WO 2010/145384

(57) **Abstract**

The present invention discloses a method for improving utilization of broadcast channel frames comprising determining whether auxiliary data exists in multiplexing data of a multiplexing frame upon generation of the multiplexing frame and encapsulating the auxiliary data in a filled portion of the multiplexing frame if yes. The present invention also discloses a method for using a filled portion of a multiplexing frame comprising a receiving terminal decoding multiplexing data in the monitored multiplexing frame, monitoring redundant data in the filled portion of the multiplexing frame when determining that an error code occurs in the decoded multiplexing data, and recovering data with the error code in the multiplexing frame using the redundant data. Or the method comprises the receiving terminal monitoring basic layer video bit stream data in a payload and enhanced layer video bit stream data in the filled portion of the multiplexing frame based on its video stream processing ability information, decoding the basic layer video stream data and enhanced layer video stream data respectively and then combining them. The present invention also discloses an apparatuses for implementing the above methods. The present invention improves channel utilization.

## Description

### Technical Field

The present invention relates to the field of carrier and application technologies of mobile multimedia broadcast channel frames, and in particular, to a method and an apparatus for improving utilization of broadcast channel frames, and a method and an apparatus for using a filled portion of a multiplexing frame.

### Background of the Related Art

A mobile multimedia broadcast is a multimedia playing technology rising in recent years. Audio and video data is transmitted through wireless channels or satellites. Due to high shortage of bandwidth resources of the wireless channels, how to use the bandwidth effectively and improve information quantity and reliability of data transmission becomes a highly concerned problem in the industry.

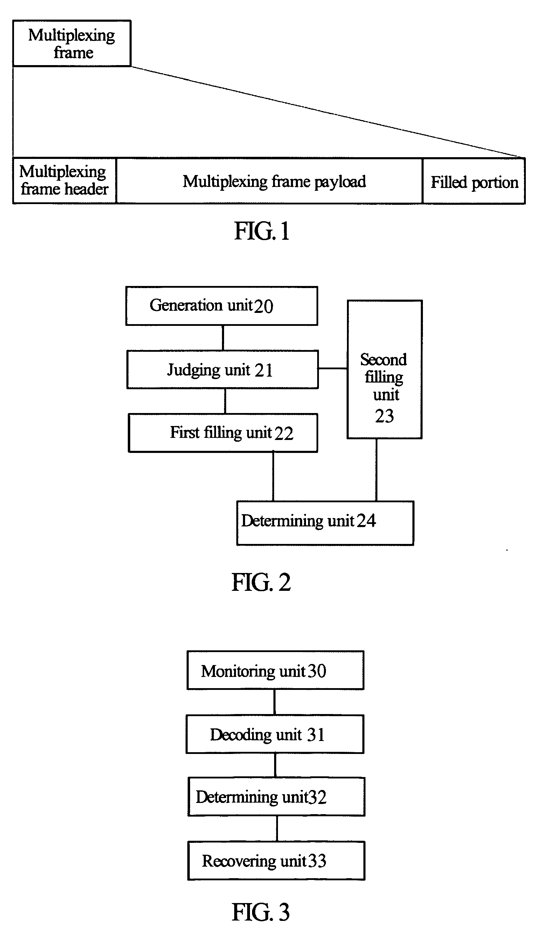

Because there are contradictions between the fixed channel bandwidth of an underlying service and elongated application data of an upper service, transmitting a filling word in a multiplexing transmission application, such as filling in a transport stream (TS) protocol and filling in an multiplexing frame tail of a China mobile multimedia broadcasting (CMMB), which undoubtedly cause the waste of resources, cannot be avoided. In the CMMB, information, such as video, audio, data, an electronic service guide, etc., is encapsulated in a multiplexing frame. FIG. 1 is a structural diagram of a CMMB multiplexing frame. As shown in FIG. 1, one multiplexing frame is composed of a multiplexing frame header, a multiplexing frame payload and a filled portion. The filled portion is filled with 0xFF. If the filled portion of the multiplexing frame is filled with 0xFF, lower utilization of the wireless channels will be resulted in directly, and especially when the filled portion is larger, causing greater resource waste. The filled portion of the CMMB is different from that of the TS in that the filled field of the TS is fragmentary and its utilization is lower, while the resource in the filled portion of the CMMB multiplexing frame is continuous and can be utilized easily. However, there is still no technical scheme for transmitting effective data by using the filled portion of the CMMB.

### Content of the Invention

In view of this, a main objective of the present invention is to provide a method and an apparatus for graded transmitting and receiving in a mobile multimedia broadcast system such that video services can be transferred in a graded way in the CMMB system, thereby satisfying multi-graded service requirements of a user terminal.

In order to achieve the above objective, implementation of the technical scheme of the present invention will be described hereinafter.

A method for improving utilization of broadcast channel frames comprises:
upon generation of a multiplexing frame, determining whether auxiliary data exists in multiplexing data carried by the multiplexing frame, and encapsulating the auxiliary data in a filled portion of the multiplexing frame if the auxiliary data exists.

Preferably, the method further comprises:
filling the filled portion of the multiplexing frame with characters of all "1" if no auxiliary data exists in the multiplexing data carried by the multiplexing frame.

Preferably, if there is still remainder in the filled portion of the multiplexing frame which has carried the auxiliary data, the remainder is filled with characters of all "1".

Preferably, the auxiliary data includes redundant data generated by calculating the multiplexing data carried by the multiplexing frame using a forward error correction (FEC) algorithm.

Preferably, the auxiliary data includes enhanced layer video bit stream data generated by encoding video data carried by the multiplexing data using scalable video coding (SVC).

Preferably, the method further comprises:
after the auxiliary data is encapsulated in the filled portion of the multiplexing frame, carrying indication information of the auxiliary data in a frame header of the multiplexing frame or a 0# multiplexing frame of the broadcast channel frames where the multiplexing frame is located.

A method for using a filled portion of a multiplexing frame comprises:
a receiving terminal decoding multiplexing data in the monitored multiplexing frame, monitoring redundant data of the filled portion of the multiplexing frame when determining that an error code occurs in the decoded multiplexing data, and recovering data with the error code in the multiplexing frame using the redundant data.

A method for using a filled portion of a multiplexing frame comprises:
a receiving terminal monitoring basic layer video bit stream data in a payload and enhanced layer video bit stream data in the filled portion of the multiplexing frame based on video stream processing ability information of the receiving terminal, decoding the basic layer video bit stream data and the enhanced layer video bit stream data respectively, and combining the basic layer video bit stream data and the enhanced layer video bit stream data.

An apparatus for improving utilization of broadcast channel frames comprises:
a generation unit configured to generate a multiplexing frame;
a judging unit configured to, when the generation unit generates the multiplexing frame, determine whether auxiliary data exists in multiplexing data carried by the multiplexing frame, and trigger a first filling unit if the auxiliary data exists; and
the first filling unit configured to encapsulate the auxiliary data in a filled portion of the multiplexing frame.

Preferably, the apparatus further comprises:
a second filling unit configured to fill the filled portion of the multiplexing frame with characters of all "1" if the judging unit determines that no auxiliary data exists in the multiplexing data carried by the multiplexing frame.

Preferably, the apparatus further comprises:
a determining unit configured to determine whether there is still remainder in the filled portion of the multiplexing frame in which the first filling unit has encapsulated the auxiliary data, and trigger the second filling unit to fill the remainder with characters of all "1" if there is the remainder.

Preferably, the auxiliary data includes redundant data generated by calculating the multiplexing data carried by the multiplexing frame using a forward error correction (FEC) algorithm.

Or, the auxiliary data includes enhanced layer video bit stream data generated by encoding video data carried by the multiplexing data using scalable video coding (SVC).

An apparatus for using a filled portion of a multiplexing frame comprises:
a monitoring unit configured to monitor the multiplexing frame;
a decoding unit configured to decode multiplexing data in the multiplexing frame;
a determining unit configured to trigger a recovering unit when determining that an error code occurs in the multiplexing data decoded by the decoding unit; and
the recovering unit configured to recover data with the error code using redundant data of the filled portion in the multiplexing frame monitored by the monitoring unit.

An apparatus for using a filled portion of a multiplexing frame comprises:
a monitoring unit configured to monitor basic layer video bit stream data in a payload and enhanced layer video bit stream data in the filled portion of the multiplexing frame based on video stream processing ability information of a receiving terminal;
a decoding unit configured to decode the basic layer video bit stream data and the enhanced layer video bit stream data respectively; and
a combining unit configured to combine the decoded basic layer video bit stream data and enhanced layer video bit stream data.

In the present invention, when a multiplexing frame of broadcast channel frames is generated, if auxiliary data exists in multiplexing data carried by the multiplexing frame, the auxiliary data is carried in a filled portion of the multiplexing frame. Due to transmission of the auxiliary data, the transmission reliability of the multiplexing data can be guaranteed, or the service level of the multiplexing data can be improved, thereby taking full advantage of resources of the multiplexing frame. The present invention improves the channel utilization, and uses fully system resources. A terminal can use the filled portion to improve the performance of the multiplexing data.

### Brief Description of Drawings

FIG. 1 is a structural diagram of a CMMB multiplexing frame;
FIG. 2 is a block diagram of an apparatus for improving utilization of broadcast channel frames;
FIG. 3 is a block diagram of an apparatus for using a filled portion of a multiplexing frame in accordance with the first embodiment of the present invention; and
FIG. 4 is a block diagram of an apparatus for using a filled portion of a multiplexing frame in accordance with the second embodiment of the present invention.

### Preferred Embodiments of the Present Invention

A basic idea of the present invention is that there is a filled portion in a multiplexing frame of a CMMB system. The entire filled portion carries invalid data, which is resource waste for broadcast channels. In the present invention, when a multiplexing frame of broadcast channel frames is generated, if auxiliary data exists in multiplexing data carried by the multiplexing frame, the auxiliary data is carried in a filled portion of the multiplexing frame. Due to transmission of the auxiliary data, the transmission reliability of the multiplexing data can be guaranteed, or the service level of the multiplexing data can be improved, thereby taking full advantage of resources of the multiplexing frame. The present invention improves the channel utilization, and uses fully system resources. A terminal can use the filled portion to improve the performance of the multiplexing data.

In order to make objectives, technical schemes and advantages of the present invention more clear, the present invention will be further described in details with reference to embodiments and accompanying drawings hereinafter.

When a multiplexing frame is generated in a multiplexer in a mobile multimedia broadcast system, a filled portion is not completely filled with 0xFF it may be filled with auxiliary data. The auxiliary data is data generated based on a multiplexing frame header and a multiplexing frame payload or data associated with multiplexing frame services, which facilitates to improve the amount of transmission information and reliability of the multiplexing frame header and the multiplexing frame payload data. The multiplexer encapsulates the multiplexing frame header and the multiplexing frame payload according to a multiplexing frame structure, and generates corresponding auxiliary data from the multiplexing frame header and the multiplexing frame payload according to application requirements. Here, the generation of the auxiliary data is associated with the actual transmission application scenario. When error codes in broadcast channels are relatively serious, error resilience performance of the mobile multimedia broadcast system is required to be improved. Then the generated auxiliary data is error protection data for the multiplexing frame header and the multiplexing frame payload, for example, redundant data generated by calculating multiplexing data carried by the multiplexing frame header and the multiplexing frame payload using the forward error correction (FEC) algorithm. Due to bandwidth constraint of the filled portion of the multiplexing frame, the present invention can choose to perform redundant protection of important data, such as the multiplexing frame header and the multiplexing sub-frame header, etc., in the multiplexing frame. One error code in this data is enough to result in the entire multiplexing frame data being unable to be analyzed correctly. If the bandwidth is sufficient, more source data can be selected to generate FEC redundant data as the auxiliary data to be filled in the filled portion. If video with higher quality is required when the bandwidth is fixed, the generated auxiliary data is enhanced layer video bit stream data obtained by encoding video stream using the SVC. Basic layer video bit stream data is carried in the multiplexing frame payload, and the enhanced layer video bit stream data can improve the picture quality of the basic layer video bit stream data. The auxiliary data is encapsulated in the filled portion. If the filled portion is not allowed in the multiplexing frame due to factors, such as the bandwidth, etc., it will not be filled. Filling methods are not limited, for example, the filling can start from any position in the filled portion, as long as negotiation with a receiving user terminal is made in advance.

If there is still the remainder in the filled portion that has carried the auxiliary data, then the remainder is filled with characters of all "1".

Information indicating whether the multiplexing frame carries the auxiliary data and indicating a way of carrying the auxiliary data by the multiplexing frame can be carried in the multiplexing frame header and notified to a user terminal. And information indicating the way of carrying the auxiliary data can also be carried in a 0# multiplexing frame of broadcast channel frames and notified to the user terminal together with control information in the 0# multiplexing frame. The way of carrying the auxiliary data in the filled portion of the multiplexing frame can be appointed as well, and notified to the user terminal or configured in the user terminal.

The present invention encapsulates the auxiliary data in the filled portion of the multiplexing frame so as to improve the amount of information carried by the broadcast channels, thereby improving the utilization of the wireless channels. The auxiliary data can be used by the terminal. Transmission and decoding of the multiplexing frame header and the multiplexing frame payload in the multiplexing frame will not be influenced, even if the auxiliary data is lost, therefore, the filled portion of the multiplexing frame may not be filled in the case that bandwidth is limited.

How the user terminal uses the filled portion of the multiplexing frame will be described below.

For the case where the filled portion of the multiplexing frame carries the redundant data, the user terminal, after receiving the multiplexing frame, can determine whether data of the filled portion is used according to error code situations of the multiplexing frame. If there is no error code in the multiplexing frame, the redundant data of the filled portion can be discarded directly and the multiplexing frame data is processed according to the normal procedure; if there is an error code in the multiplexing frame, then the filled portion can be analyzed from the appointed position to obtain FEC redundant code and recover the protected data in the multiplexing frame such that the user terminal can have better fault-tolerant ability and more superior user experience.

For the case that the filled portion of the multiplexing frame carries the enhanced layer video bit stream data, the user terminal determines whether to monitor the enhanced layer video bit stream data carried in the filled portion of the multiplexing frame according to video stream processing ability of the user terminal. If the user terminal can only process the basic layer video bit stream data, then the user terminal will not monitor the filled portion of the multiplexing frame; while if the user terminal has the processing ability for the enhanced layer video bit stream data, then it will monitor the filled portion of the multiplexing frame, and decode the enhanced layer video bit stream data in the monitored filled portion of the multiplexing frame to combine with the basic layer video bit stream data carried by the payload portion to generate better video bit stream data such that better video pictures are displayed to the user terminal.

FIG. 2 is a block diagram of an apparatus for improving utilization of broadcast channel frames in accordance with the present invention. As shown in FIG. 2, the apparatus for improving the utilization of the broadcast channel frames in accordance with the present invention comprises a generation unit 20, a judging unit 21 and a first filling unit 22. The generation unit 20 is configured to generate a multiplexing frame. The judging unit 21 is configured to determine whether auxiliary data exists in multiplexing data carried by the multiplexing frame when the generating unit 20 generates the multiplexing frame, and trigger the first filling unit 22 if the auxiliary data exists. The first filling unit 22 is configured to encapsulate the auxiliary data in a filled portion of the multiplexing frame.

As shown in FIG. 2, the apparatus for improving the utilization of the broadcast channel frames in accordance with the present invention further comprises a second filling unit 23 configured to fill the filled portion of the multiplexing frame with characters of all "1" when the judging unit 21 determines that no auxiliary data exists in multiplexing data carried by the multiplexing frame.

As shown in FIG. 2, the apparatus for improving the utilization of the broadcast channel frames on accordance with the present invention further comprises a determining unit 24 configured to determine whether there is the remainder in the filled portion of the multiplexing frame in which the first filling unit 22 has encapsulated the auxiliary data, and trigger the second filling unit 23 to fill the remainder with characters of all "1" if there is the remainder.

Those skilled in the art should understand that the second filling unit 23 and the determining unit 24 shown in FIG. 2 are not components which are necessary to implement the apparatus for improving the utilization of the broadcast channel frames, and they are only set for optimizing the apparatus for improving the utilization of the broadcast channel frames. The apparatus for improving the utilization of the broadcast channel frames shown in FIG. 2 is applicable to the CMMB system side.

Those skilled in the art should understand that the realized functions of each processing unit in the apparatus for improving the utilization of the broadcast channel frames shown in FIG. 2 can be understood with reference to the related description of the above method. The functions of each unit in the apparatus shown in FIG. 2 can be implemented by programs running in a processor, or can be implemented by a specific logic circuit.

FIG. 3 is a block diagram of an apparatus for using a filled portion of a multiplexing frame in accordance with the first embodiment of the present invention. As shown in FIG. 3, an apparatus for using the filled portion of the multiplexing frame in accordance with the present invention comprises a monitoring unit 30, a decoding unit 31, a determining unit 32 and a recovering unit 33. The monitoring unit 30 is configured to monitor the multiplexing frame; the decoding unit 31 is configured to decode the multiplexing data in the multiplexing frame; the determining unit 32 is configured to trigger the recovering unit 33 when determining that there is an error code in the multiplexing data decoded by the decoding unit 31; and the recovering unit 33 recoveries the multiplexing data with the error code using redundant data in the filled portion of the multiplexing monitored by the monitoring unit 30.

Those skilled in the art should understand that the realized functions of each processing unit in the apparatus for using the filled portion of the multiplexing frame in accordance with the present invention shown in FIG. 3 can be understood with reference with the related description of the above method. The functions of each unit in the apparatus shown in FIG. 3 can be implemented by programs running in a processor, or also can be implemented by a specific logic circuit.

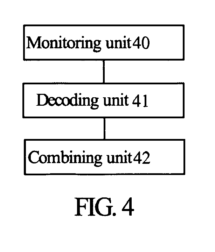

FIG. 4 is a block diagram of an apparatus for using a filled portion of a multiplexing frame in accordance with the second embodiment of the present invention. As shown in FIG. 4, the apparatus for using the filled portion of the multiplexing frame in accordance with the present invention comprises a monitoring unit 40, a decoding unit 41 and a combining unit 42. The monitoring unit 40 is configured to monitor basic layer video bit stream data in the payload and enhanced layer video bit stream data in the filled portion of the multiplexing frame based on video stream processing ability information of a receiving terminal; the decoding unit 41 is configured to decode the basic layer video bit stream data and the enhanced layer video bit stream data respectively; and the combining unit 42 is configured to combine the decoded basic layer video bit stream data and enhanced layer video bit stream data.

Those skilled in the art should understand that the realized functions of each processing unit in the apparatus for using the filled portion of the multiplexing frame in accordance with the present invention shown in FIG. 4 can be understood with reference to the related description of the above method. The functions of each unit in the apparatus shown in FIG. 4 can be implemented by programs running in a processor, or also can be implemented by a specific logic circuit.

The apparatuses for using the filled portion of the multiplexing frame shown in FIG. 3 and FIG. 4 are applicable to the user terminal side.

The above description is the preferred embodiments of the present invention only and is not intended to limit the present invention.

## Claims

1. A method for improving utilization of broadcast channel frames comprising:
upon generation of a multiplexing frame, determining whether auxiliary data exists in multiplexing data carried by the multiplexing frame, and encapsulating the auxiliary data in a filled portion of the multiplexing frame if the auxiliary data exists.

2. The method according to claim 1, further comprising:
filling the filled portion of the multiplexing frame with characters of all "1" if no auxiliary data exists in the multiplexing data carried by the multiplexing frame.

3. The method according to claim 1, wherein if there is still remainder in the filled portion of the multiplexing frame which has carried the auxiliary data, the remainder is filled with characters of all "1".

4. The method according to any one of claims 1 to 3, wherein the auxiliary data includes redundant data generated by calculating the multiplexing data carried by the multiplexing frame using a forward error correction (FEC) algorithm.

5. The method according to any one of claims 1 to 3, wherein the auxiliary data includes enhanced layer video bit stream data generated by encoding video data carried by the multiplexing data using scalable video coding (SVC).

6. The method according to any one of claims 1 to 3, further comprising:
after the auxiliary data is encapsulated in the filled portion of the multiplexing frame, carrying indication information of the auxiliary data in a frame header of the multiplexing frame or a 0# multiplexing frame of the broadcast channel frames where the multiplexing frame is located.

7. A method for using a filled portion of a multiplexing frame comprising:
a receiving terminal decoding multiplexing data in the monitored multiplexing frame, monitoring redundant data of the filled portion of the multiplexing frame when determining that an error code occurs in the decoded multiplexing data, and recovering data with the error code in the multiplexing frame using the redundant data.

8. A method for using a filled portion of a multiplexing frame comprising:
a receiving terminal monitoring basic layer video bit stream data in a payload and enhanced layer video bit stream data in the filled portion of the multiplexing frame based on video stream processing ability information of the receiving terminal, decoding the basic layer video bit stream data and the enhanced layer video bit stream data respectively, and combining the basic layer video bit stream data and the enhanced layer video bit stream data.

9. An apparatus for improving utilization of broadcast channel frames comprising a generation unit, a judging unit and a first filling unit, wherein
the generation unit is configured to generate a multiplexing frame;
the judging unit is configured to, when the generation unit generates the multiplexing frame, determine whether auxiliary data exists in multiplexing data carried by the multiplexing frame, and trigger the first filling unit if the auxiliary data exists; and
the first filling unit is configured to encapsulate the auxiliary data in a filled portion of the multiplexing frame.

10. The apparatus according to claim 9, further comprising:
a second filling unit configured to fill the filled portion of the multiplexing frame with characters of all "1" if the judging unit determines that no auxiliary data exists in the multiplexing data carried by the multiplexing frame.

11. The apparatus according to claims 9 or 10, further comprising:
a determining unit configured to determine whether there is still remainder in the filled portion of the multiplexing frame in which the first filling unit has encapsulated the auxiliary data, and trigger the second filling unit to fill the remainder with characters of all "1" if there is the remainder.

12. The apparatus according to claim 11, wherein the auxiliary data includes redundant data generated by calculating the multiplexing data carried by the multiplexing frame using a forward error correction (FEC) algorithm; or
the auxiliary data includes enhanced layer video bit stream data generated by encoding video data carried by the multiplexing data using scalable video coding (SVC).

13. An apparatus for using a filled portion of a multiplexing frame comprising a monitoring unit, a decoding unit, a determining unit and a recovering unit, wherein
the monitoring unit is configured to monitor the multiplexing frame;
the decoding unit is configured to decode multiplexing data in the multiplexing frame;
the determining unit is configured to trigger a recovering unit when determining that an error code occurs in the multiplexing data decoded by the decoding unit; and
the recovering unit is configured to recover data with the error code using redundant data of the filled portion in the multiplexing frame monitored by the monitoring unit.

14. An apparatus for using a filled portion of a multiplexing frame comprising a monitoring unit, a decoding unit and a combining unit, wherein
the monitoring unit is configured to monitor basic layer video bit stream data in a payload and enhanced layer video bit stream data in the filled portion of the multiplexing frame based on video stream processing ability information of a receiving terminal;
the decoding unit is configured to decode the basic layer video bit stream data and the enhanced layer video bit stream data respectively; and
the combining unit is configured to combine the decoded basic layer video bit stream data and enhanced layer video bit stream data.
